# EUROPÄISCHE PATENTSCHRIFT

(11) **EP 4 326 576 B1**
(45) Veröffentlichungstag und Bekanntmachung des Hinweises auf die Patenterteilung: **25.02.2026**
(21) Anmeldenummer: 22723343.4
(22) Anmeldetag: 08.04.2022
(51) Int. Cl.: B60L 3/00, B60L 58/26, B60L 58/40

(54) **UNTERSEEBOOT MIT GEMEINSAM REDUNDANTEN KÜHLKREISLÄUFEN, BEISPIELSWEISE EINER BRENNSTOFFZELLE UND EINER BATTERIE**
SUBMARINE WITH JOINTLY REDUNDANT COOLING CIRCUITS, FOR EXAMPLE OF A FUEL CELL AND A BATTERY
SOUS-MARIN AVEC CIRCUITS DE REFROIDISSEMENT À REDONDANCE COMMUNE, PAR EXEMPLE POUR UNE PILE À COMBUSTIBLE ET UNE BATTERIE

(30) Priorität: 21.04.2021 DE 102021203948
(43) Veröffentlichungstag der Anmeldung: 28.02.2024
(73) Patentinhaber: TKMS GmbH, 24143 Kiel (DE); thyssenkrupp AG, 45143 Essen (DE)
(72) Erfinder: EGGERSGLÜSS, Gunnar, 24119 Kronshagen (DE); LAUDI, Sebastian, 24232 Schönkirchen (DE)
(74) Vertreter: thyssenkrupp Intellectual Property GmbH
(86) Internationale Anmeldenummer: PCT/EP2022/059380
(87) Internationale Veröffentlichungsnummer: WO 2022/223316

(56) Entgegenhaltungen:
- EP-A1- 3 474 368
- WO-A1-2004/030182
- GB-A- 2 250 130

## Beschreibung

Die Erfindung betrifft ein Unterseeboot mit einer Brennstoffzelle und einer Batterie, wobei beide jeweils einen eigenen Kühlkreislauf aufweisen.

Bisher wurden auf Unterseebooten praktisch ausschließlich Batteriesysteme auf der Basis des Blei-Akkumulators eingesetzt. Diese sind erprobt und haben daher eine hohe Akzeptanz im Markt. Außerdem ist die Technologie vergleichsweise robust.

Bezüglich der Kühlung sind Blei-Akkumulatoren vergleichsweise wenig problematisch. Eine Kühlung ist nur bei sehr hoher Leistungsabgabe notwendig. Fällt also das Kühlsystem aus, so kann bereits durch eine Drosselung der maximalen Leistungsabgabe die Sicherheit bei einem weiteren Betrieb sichergestellt werden. Es kann daher auf eine redundante Ausführung des Kühlsystems verzichtet werden.

Aufgrund des besseren Leistungsgewichtes besteht derzeit der Wunsch, zunehmend auch Batterien auf Lithium-Basis einzusetzen. Zum einen erfolgt dieses bei Bootneubauten, zum anderen sollen die bestehenden Blei-Akkumulatoren aber auch durch entsprechende neue Systeme ersetzt werden, um die Kapazität und damit die Reichweite steigern zu können.

Bei Akkumulatoren auf Lithium-Basis ist jedoch die Temperatur ein deutlich kritischerer Faktor, insbesondere auch aufgrund der Temperaturempfindlichkeit der für den Betrieb notwendigen Steuerungselektronik. Daher gewinnt das Kühlsystem deutlich an Bedeutung.

Aus der US 2014 / 0 150 485 A1 ist eine Speichereinheit für ein Antriebssystem in einem Fahrzeug bekannt. Ein Kühlkreislauf für eine Brennstoffzelle in einem U-Boot, wobei das U-Boot auch Akkumulatoren enthält, ist aus WO 2004/030182 A1 bekannt.

Aufgabe der Erfindung ist es, ein sicheres Unterseeboot bereit zu stellen und dabei das Gewicht und das Volumen der Ausrüstung so gering wie möglich zu halten.

Gelöst wird diese Aufgabe durch das Unterseeboot mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Unterseeboot weist eine erste abwärmeerzeugende Vorrichtung, beispielsweise eine Energiespeichervorrichtung, und eine zweite abwärmeerzeugende Vorrichtung, beispielsweise eine Brennstoffzellenvorrichtung, auf. Die erste abwärmeerzeugende Vorrichtung, beispielsweise eine Energiespeichervorrichtung, wird über einen zweiten Kühlkreislauf, beispielsweise einen Energiespeicherkühlkreislauf, gekühlt und die zweite abwärmeerzeugende Vorrichtung, beispielsweise die Brennstoffzellenvorrichtung, wird über einen ersten Kühlkreislauf, beispielsweise einen Brennstoffzellenkühlkreislauf, gekühlt. Der zweite Kühlkreislauf weist eine erste Umwälzpumpe auf und der zweite Kühlkreislaufweist eine zweite Umwälzpumpe auf.

Erfindungsgemäß weist der zweite Kühlkreislaufeine dritte Umwälzpumpe auf, wobei die dritte Umwälzpumpe parallel zur zweiten Umwälzpumpe angeordnet ist. Hierdurch ist eine Redundanz für den zweiten Kühlkreislauferreicht. Fällt die zweite Umwälzpumpe aus, so kann einfach die dritte Umwälzpumpe aktiviert werden und die Aufgabe übernehmen. Hierbei muss die dritte Umwälzpumpe nicht die volle Leistungsfähigkeit der zweiten Umwälzpumpe aufweisen. Ist die Leistungsfähigkeit der dritten Umwälzpumpe geringer als die der zweiten Umwälzpumpe ausgeführt, in dem Sinne, dass sie ein geringeres Fördervolumen pro Zeiteinheit aufweist oder erzeugt, so kann über die Steuerung der ersten abwärmeerzeugenden Vorrichtung, beispielsweise einer Energiespeichervorrichtung, die Leistung des Wärmeerzeugenden Vorgangs entsprechend gedrosselt werden, beispielsweise die entnehmbare Leistung der Energiespeichervorrichtung zu begrenzen.

Weiter weist das Unterseeboot eine erste Kühlkreisverbindung auf. Die erste Kühlkreisverbindung verbindet den ersten Kühlkreislauf vor der ersten Umwälzpumpe mit dem zweiten Kühlkreislauf vor der zweiten Umwälzpumpe und hinter der Abzweigung zur dritten Umwälzpumpe. Das Unterseeboot weist weiter eine zweite Kühlkreisverbindung auf. Die zweite Kühlkreisverbindung verbindet den ersten Kühlkreislauf, beispielsweise den Brennstoffzellenkühlkreislauf, hinter der ersten Umwälzpumpe mit dem zweiten Kühlkreislauf, beispielsweise dem Energiespeicherkühlkreislauf, hinter der zweiten Umwälzpumpe und vor der Zusammenführung von der dritten Umwälzpumpe. Hierdurch ist es möglich, das Kühlmittel aus dem ersten Kühlkreislauf entweder durch die erste Umwälzpumpe oder die zweite Umwälzpumpe zu leiten. Um dieses gezielt steuern zu können, ist in der ersten Kühlkreisverbindung ein erstes Umschaltventil angeordnet, in der zweiten Kühlkreisverbindung ist ein zweites Umschaltventil angeordnet, im zweiten Kühlkreislauf vor der Verbindung mit der ersten Kühlkreisverbindung und hinter der Abzweigung zur dritten Umwälzpumpe ist ein drittes Umschaltventil angeordnet und im zweiten Kühlkreislauf hinter der Verbindung mit der zweiten Kühlkreisverbindung und vor der Zusammenführung von der dritten Umwälzpumpe ist ein viertes Umschaltventil angeordnet.

Im Regelfall sind das erste Umschaltventil und das zweite Umschaltventil geschlossen, das Kühlmittel des ersten Kühlkreislaufs wird durch die erste Umwälzpumpe gefördert. Weiter sind das dritte Umschaltventil und das vierte Umschaltventil geöffnet, sodass das Kühlmittels des zweiten Kühlkreislaufs durch die zweite Umwälzpumpe gefördert wird.

Fällt die erste Umwälzpumpe aus, so werden das dritte Umschaltventil und das vierte Umschaltventil geschlossen und das erste Umschaltventil und das zweite Umschaltventil geöffnet. Hierdurch kann das Kühlmittel des ersten Kühlkreislaufs durch die zweite Umwälzpumpe gefördert werden. Weiter wird die dritte Umwälzpumpe aktiviert, wodurch das Kühlmittel des zweiten Kühlkreislaufs durch die dritte Umwälzpumpe gefördert wird.

Vorteil ist, dass durch die Verbindung beider Kühlkreisläufe mit verschließbaren Kühlkreisverbindungen die Redundanz für beide Systeme erzielt werden kann. Insbesondere wird durch das System vermieden für beide Systeme eine eigene Redundanz zu schaffen. Die zusätzliche Verrohrung ist dabei kleiner und weniger Aufwändig in der Wartung als die zusätzliche Pumpe, so dass einerseits die Zuverlässigkeit nicht reduziert wird und andererseits Platz und Aufwand gespart wird.

Auch wenn hauptsächlich auf den Anwendungsfall eingegangen wird, dass die erste abwärmeerzeugende Vorrichtung eine Energiespeichervorrichtung und die zweite abwärmeerzeugende Vorrichtung eine Brennstoffzellenvorrichtung ist und dieses auch eine bevorzugte Ausführungsform ist, so ist die Erfindung hierauf nicht begrenzt.

Alternativ kann die erste abwärmeerzeugende Vorrichtung eine Vorrichtung zur Bereitstellung von Kaltwasser sein und die zweite abwärmeerzeugende Vorrichtung der Fahrmotor sein.

Alternativ kann die erste abwärmeerzeugende Vorrichtung eine Vorrichtung zur Bereitstellung von Kaltwasser und die zweite abwärmeerzeugende Vorrichtung ein Stromgenerator sein.

Alternativ kann die erste abwärmeerzeugende Vorrichtung eine Vorrichtung zur Bereitstellung von Kaltwasser und die zweite abwärmeerzeugende Vorrichtung eine Energiespeichervorrichtung sein.

Alternativ kann die erste abwärmeerzeugende Vorrichtung eine Energiespeichervorrichtung und die zweite abwärmeerzeugende Vorrichtung ein Dieselaggregat sein.

In einer weiteren Ausführungsform der Erfindung weist der erste Kühlkreislauf, einen ersten Wärmetauscher auf. Der erste Wärmetauscher sorgt für einen Wärmeübertrag von Wärme des Kühlmittels des Primärkreislaufs auf einen Sekundärkreislauf. Dieser Sekundärkühlkreislauf kann beispielsweise sekundärseitig über eine erste Wärmetauscherpumpe mit Umgebungswasser versorgt werden. Hierbei handelt es sich dann um einen offenen Sekundärkühlkreislauf. Weiter weist der zweite Kühlkreislauf einen zweiten Wärmetauscher auf. Der zweite Wärmetauscher sorgt für einen Wärmeübertrag von Wärme des Kühlmittels des Primärkreislaufs auf einen Sekundärkreislauf. Dieser Sekundärkühlkreislauf kann beispielsweise sekundärseitig über eine zweite Wärmetauscherpumpe mit Umgebungswasser versorgt werden. Hierbei handelt es sich dann um einen offenen Sekundärkühlkreislauf. Die Verwendung geschlossener Kühlkreisläufe ist vorteilhaft, da insbesondere im Bereich der Brennstoffzelle das Kühlmittel sehr gut definierte Eigenschaften aufweist und Probleme wie Anhaftungen oder Wachstum biologischer Systeme im Kühlkreislauf vermieden werden.

Es kann alternativ vorgesehen sein, dass zwischen den jeweiligen primären Kühlkreisläufen und den jeweiligen Sekundärkreisläufen jeweils ein zusätzlicher, geschlossener Kühlmittelkreislauf angeordnet ist, der die Abwärme überträgt.

In einer weiteren Ausführungsform der Erfindung ist der Eingang des zweiten Wärmetauschers mit dem Eingang des ersten Wärmetauschers verbindbar. Hierdurch werden beide Systeme für das Umgebungswasser verbindbar, falls eine der Pumpen in einem der beiden Systeme ausfällt und die Pumpen vor den Wärmetauschern angeordnet sind.

In einer weiteren Ausführungsform der Erfindung ist der Ausgang des zweiten Wärmetauschers mit dem Ausgang des ersten Wärmetauschers verbindbar. Hierdurch werden beide Systeme für das Umgebungswasser verbindbar, falls eine der Pumpen in einem der beiden Systeme ausfällt und die Pumpen hinter den Wärmetauschern angeordnet sind.

In einer weiteren Ausführungsform der Erfindung weist das Unterseeboot alternativ oder zusätzlich zur Verbindbarkeit der beiden Umgebungswassersysteme eine dritte Wärmetauscherpumpe auf. Die dritte Wärmetauscherpumpe ist wechselweise mit dem ersten Wärmetauscher oder dem zweiten Wärmetauscher verbindbar. Die dritte Wärmetauscherpumpe ist somit so verschaltet, dass diese entweder die erste Wärmetauscherpumpe oder die zweite Wärmetauscherpumpe ersetzen kann und durch Öffnung von entsprechenden Ventilen vorzugsweise parallel zur zu ersetzenden Wärmetauscherpumpe schaltbar ist.

In einer weiteren Ausführungsform der Erfindung ist parallel zur zweiten abwärmeerzeugenden Vorrichtung im ersten Kühlkreislauf eine Kühlmittelentgasungsvorrichtung angeordnet. Besonders bevorzugt ist der durch die Kühlmittelentgasungsvorrichtung fließende Volumenstromanteil einstellbar. Wird nach dem Ausfall der ersten Umwälzpumpe die zweite Umwälzpumpe mit dem ersten Kühlkreislauf verbunden, so gelangt Kühlflüssigkeit in den ersten Kühlkreislauf, welcher typischerweise nicht entgast ist, da dieses für die erste abwärmeerzeugende Vorrichtung nicht notwendig ist. Zwar ist dieses nur ein kleines Volumen, es kann jedoch vorteilhaft sein, dann wenigstens kurzfristig den Volumenstromanteil durch die Kühlmittelentgasungsvorrichtung zu erhöhen, um schnellstmöglich die gelösten Gase zu entfernen.

In einer weiteren Ausführungsform der Erfindung ist die dritte Umwälzpumpe kleiner als die erste Umwälzpumpe und die zweite Umwälzpumpe. Hierdurch kann Platz und Gewicht gespart werden. Weiter ist diese dritte Umwälzpumpe nur für den Notfall vorgesehen, in dem durch eine zusätzliche Reduktion der Leistungsabgabe der ersten abwärmeerzeugenden Vorrichtung die Anforderung an die dritte Umwälzpumpe einfach gesenkt werden kann.

In einem weiteren Aspekt betrifft die Erfindung ein Verfahren zum Umrüsten eines Unterseebootes mit einer ersten abwärmeerzeugenden Vorrichtung auf Basis von Blei-Akkumulatoren auf eine Energiespeichervorrichtung mit redundanten Kühlkreisläufen gemäß der zuvor ausgeführten Erfindung. Im Verfahren der Umrüstung wird ein Säureumwälzverdichter durch eine geeignete dritte Umwälzpumpe ersetzt und so der Platz und das Gewicht genutzt, welches durch den Ausbau des Säureumwälzverdichters entsteht. Der Säureumwälzverdichter ist üblicherweise vergleichsweise klein, deutlich kleiner als eine Umwälzpumpe für einen Kühlmittelkreislauf. Die dritte Umwälzpumpe wird mit dem zweiten Kühlkreislauf verbunden. Zusätzlich werden weiter die erste Kühlkreisverbindung, die zweite Kühlkreisverbindung, das erste Umschaltventil, das zweite Umschaltventil, das dritte Umschaltventil und das vierte Umschaltventil eingebaut. Hierdurch kann bei einer Umrüstung vergleichsweise einfach ein erfindungsgemäßes Unterseeboot hergestellt werden.

Nachfolgend ist das erfindungsgemäße Unterseeboot anhand eines in der Zeichnung dargestellten Ausführungsbeispiels näher erläutert.
Fig. 1 schematische Darstellung einer ersten Ausführungsform
Fig. 2 schematische Darstellung einer zweiten Ausführungsform

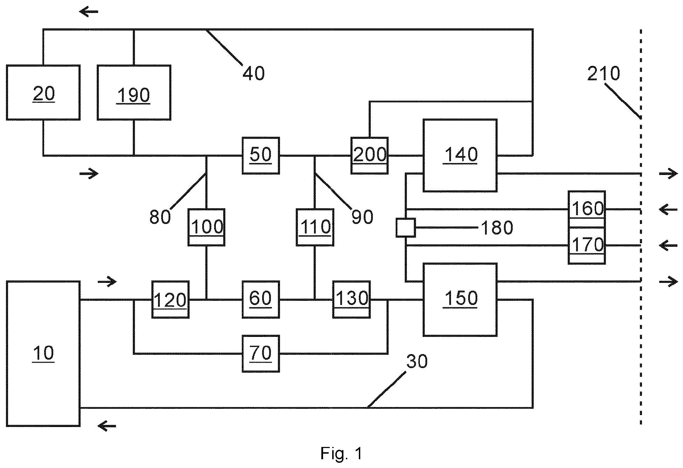

In Fig. 1 ist der entsprechende Teil eines erfindungsgemäßen Unterseeboots schematisch dargestellt. Das Unterseeboot weist eine Brennstoffzellenvorrichtung 20 mit einem Brennstoffzellenkühlkreislauf 40 auf. Parallel zur Brennstoffzellenvorrichtung ist eine Kühlmittelentgasungsvorrichtung 190 angeordnet, wie diese beispielsweise DE 10 2020 202 024 oder der DE 10 2020 206 554 entnommen werden kann. Die Flussrichtung des Kühlmittels in dem Brennstoffzellenkühlkreislauf 40 ist in der Fig. 1 durch Pfeile angedeutet. Der Brennstoffzellenkühlkreislauf 40 weist weiter eine erste Umwälzpumpe 50 zur Umwälzung des Kühlmittels sowie einen ersten Wärmetauscher 140 auf. Insbesondere zum Anfahren der Brennstoffzellenvorrichtung 20 kann über das Anfahrventil 200 der Kühlmittelstrom an dem ersten Wärmetauscher 140 vorbeigeführt werden.

Weiter weist das Unterseeboot eine Energiespeichervorrichtung 10 auf, wobei die Energiespeichervorrichtung 10 über einen Energiespeicherkühlkreislauf 30 gekühlt wird. Der Energiespeicherkühlkreislauf 30 weist eine zweite Umwälzpumpe 60 und einen zweiten Wärmetauscher 150 auf. Um im Fall des Ausfalls der zweitem Umwälzpumpe 60 die Kühlung weiter aufrecht erhalten zu können ist parallel zur zweiten Umwälzpumpe 60 eine dritte Umwälzpumpe 70 eingebaut, die beispielsweise jedoch nur die Hälfte des Fördervolumens der zweiten Umwälzpumpe 60 aufweist.

Um die Wärme an die Bootsumgebung abgegeben zu können wird der erste Wärmetauscher 140 über eine erste Wärmetauscherpumpe 160 mit Wasser aus der Umgebung außerhalb der Bordwand 210, beispielsweise als Teil des Druckkörpers, versorgt. Ebenso wird der zweite Wärmetauscher 150 über eine zweite Wärmetauscherpumpe 170 mit Wasser aus der Umgebung außerhalb der Bordwand 210 versorgt. Die Pfeile geben eine beispielhafte Strömungsrichtung an, wobei die Laufrichtung der beiden Wärmetauscherpumpen 160, 170 auch umgedreht sein könnte und sich dann die Strömungsrichtungen umkehren würden.

Um eine Redundanz auch für die erste Umwälzpumpe 50 zu erzielen, weist das Unterseeboot eine erste Kühlkreisverbindung 80 und eine zweite Kühlkreisverbindung 90 auf. Die erste Kühlkreisverbindung 80 verbindet den Brennstoffzellenkühlkreislauf 40 vor der ersten Umwälzpumpe 50 mit dem Energiespeicherkühlkreislauf 30 vor der zweiten Umwälzpumpe 60 und hinter der Abzweigung zur dritten Umwälzpumpe 70. Die zweite Kühlkreisverbindung 90 verbindet den Brennstoffzellenkühlkreislauf 40 hinter der ersten Umwälzpumpe 50 mit dem Energiespeicherkühlkreislauf 30 hinter der zweiten Umwälzpumpe 60 und vor der Zusammenführung von der dritten Umwälzpumpe 70.

Um diese Kühlkreisverbindungen 80, 90 gezielt aktivieren und deaktivieren zu können, ist in der ersten Kühlkreisverbindung 80 ein erstes Umschaltventil 100 angeordnet und in der zweiten Kühlkreisverbindung 90 ist ein zweites Umschaltventil 110 angeordnet. Weiter ist im Energiespeicherkühlkreislauf 30 vor der Verbindung mit der ersten Kühlkreisverbindung 80 und hinter der Abzweigung zur dritten Umwälzpumpe 70 ein drittes Umschaltventil 120 angeordnet. Weiter ist im Energiespeicherkühlkreislauf 30 hinter der Verbindung mit der zweiten Kühlkreisverbindung 90 und vor der Zusammenführung von der dritten Umwälzpumpe 70 ein viertes Umschaltventil 130 angeordnet.

Im Regelfall sind das erste Umschaltventil 100 und das zweite Umschltventil110 geschlossen, das dritte Umschaltventil 120 und das vierte Umschaltventil 130 offen. Fällt nun die erste Umwälzpumpe 50 aus, wo werden das erste Umschaltventil 100 und das zweite Umschaltventil 110 geöffnet und das dritte Umschaltventil 120 und das vierte Umschaltventil 130 geschlossen. Jetzt kann das Kühlmittel des Brennstoffzellenkühlkreislauf 40 durch die zweite Umwälzpumpe 60 gefördert werden und das Kühlmittel des Energiespeicherkühlkreislauf 30 durch die dritte Umwälzpumpe 70 gefördert werden, ohne dass es zu einer Vermischung kommt. Lediglich das kleine Volumen, welches sich im Bereich der zweiten Umwälzpumpe 60 zwischen den Umschaltventilen 100, 110, 120, 130 befindet, gelangt in den Brennstoffzellenkühlkreislauf 40. Hierdurch wir des kurzfristig zu einem Anstieg des in der Kühlmittelentgasungsvorrichtung 190 ausgetragenen Gasmenge kommen.

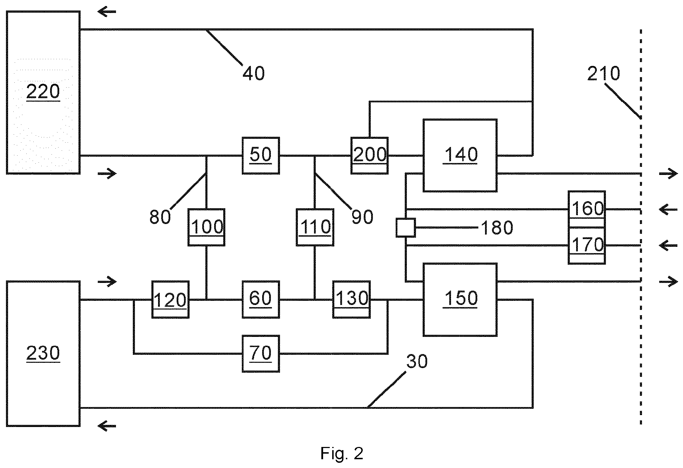

Das in Fig. 2 gezeigte zweite Ausführungsbeispiel unterscheidet sich von dem in Fig. 1 gezeigten ersten Ausführungsbeispiel dadurch, dass die erste abwärmeerzeugende Vorrichtung eine Vorrichtung zur Bereitstellung von Kaltwasser 230 und die zweite abwärmeerzeugende Vorrichtung der Fahrmotor 220 ist. Im Weiteren sind beide Ausführungsformen gleich ausgeführt.

### Bezugszeichen

- 10: Energiespeichervorrichtung
- 20: Brennstoffzellenvorrichtung
- 30: Energiespeicherkühlkreislauf
- 40: Brennstoffzellenkühlkreislauf
- 50: erste Umwälzpumpe
- 60: zweite Umwälzpumpe
- 70: dritte Umwälzpumpe
- 80: erste Kühlkreisverbindung
- 90: zweite Kühlkreisverbindung
- 100: erstes Umschaltventil
- 110: zweites Umschaltventil
- 120: drittes Umschaltventil
- 130: viertes Umschaltventil
- 140: erster Wärmetauscher
- 150: zweiter Wärmetauscher
- 160: erste Wärmetauscherpumpe
- 170: zweite Wärmetauscherpumpe
- 180: Verbindungsventil
- 190: Kühlmittelentgasungsvorrichtung
- 200: Anfahrventil
- 210: Bordwand
- 220: Fahrmotor
- 230: Vorrichtung zur Bereitstellung von Kaltwasser

## Patentansprüche

1. Unterseeboot mit einer ersten abwärmeerzeugenden Vorrichtung und einer zweiten abwärmeerzeugenden Vorrichtung, wobei die erste abwärmeerzeugende Vorrichtung über einen zweiten Kühlkreislauf gekühlt wird, wobei die zweite abwärmeerzeugende Vorrichtung über einen ersten Kühlkreislauf gekühlt wird, wobei der erste Kühlkreislauf eine erste Umwälzpumpe (50) aufweist, wobei der zweite Kühlkreislauf eine zweite Umwälzpumpe (60) aufweist, wobei der zweite Kühlkreislauf eine dritte Umwälzpumpe (70) aufweist, wobei die dritte Umwälzpumpe (70) parallel zur zweiten Umwälzpumpe (60) angeordnet ist, wobei das Unterseeboot eine erste Kühlkreisverbindung (80) aufweist, wobei die erste Kühlkreisverbindung (80) den ersten Kühlkreislauf vor der ersten Umwälzpumpe (50) mit dem zweiten Kühlkreislauf vor der zweiten Umwälzpumpe (60) und hinter der Abzweigung zur dritten Umwälzpumpe (70) verbindet, **dadurch gekennzeichnet, dass** das Unterseeboot eine zweite Kühlkreisverbindung (90) aufweist,
wobei die zweite Kühlkreisverbindung (90) den ersten Kühlkreislauf hinter der ersten Umwälzpumpe (50) mit dem zweiten Kühlkreislauf hinter der zweiten Umwälzpumpe (60) und vor der Zusammenführung von der dritten Umwälzpumpe (70) verbindet, wobei in der ersten Kühlkreisverbindung (80) ein erstes Umschaltventil (100) angeordnet ist, wobei in der zweiten Kühlkreisverbindung (90) ein zweites Umschaltventil (110) angeordnet ist, wobei im zweiten Kühlkreislauf vor der Verbindung mit der ersten Kühlkreisverbindung (80) und hinter der Abzweigung zur dritten Umwälzpumpe (70) ein drittes Umschaltventil (120) angeordnet ist, wobei im dritten Kühlkreislauf hinter der Verbindung mit der zweiten Kühlkreisverbindung (90) und vor der Zusammenführung von der dritten Umwälzpumpe (70) ein viertes Umschaltventil (130) angeordnet ist.

2. Unterseeboot nach Anspruch 1, **dadurch gekennzeichnet, dass** die erste abwärmeerzeugende Vorrichtung eine Energiespeichervorrichtung (10) und die zweite abwärmeerzeugende Vorrichtung eine Brennstoffzellenvorrichtung (20) ist, wobei der zweite Kühlkreislauf ein Energiespeicherkühlkreislauf (30) ist, wobei der erste Kühlkreislauf ein Brennstoffzellenkühlkreislauf (40) ist.

3. Unterseeboot nach Anspruch 2, **dadurch gekennzeichnet, dass** parallel zur Brennstoffzellenvorrichtung (20) im Brennstoffzellenkühlkreislauf (40) eine Kühlmittelentgasungsvorrichtung (190) angeordnet ist.

4. Unterseeboot nach einem der vorstehenden Ansprüche, **dadurch gekennzeichnet, dass** der erste Kühlkreislauf einen ersten Wärmetauscher (140) aufweist, wobei der erste Wärmetauscher (140) über eine erste Wärmetauscherpumpe (160) mit Umgebungswasser gekühlt wird, wobei der zweite Kühlkreislauf einen zweiten Wärmetauscher (150) aufweist, wobei der zweite Wärmetauscher (150) über eine zweite Wärmetauscherpumpe (170) mit Umgebungswasser gekühlt wird.

5. Unterseeboot nach Anspruch 4, **dadurch gekennzeichnet, dass** der Eingang des zweiten Wärmetauschers (150) mit dem Eingang des ersten Wärmetauschers (140) verbindbar ist.

6. Unterseeboot nach Anspruch 4, **dadurch gekennzeichnet, dass** das Unterseeboot eine dritte Wärmetauscherpumpe aufweist, wobei die dritte Wärmetauscherpumpe wechselweise mit dem ersten Wärmetauscher (140) oder dem zweiten Wärmetauscher (150) verbindbar ist.

7. Unterseeboot nach einem der vorstehenden Ansprüche, **dadurch gekennzeichnet, dass** die Leistungsfähigkeit der dritten Umwälzpumpe (70) geringer als die Leistungsfähigkeit der ersten Umwälzpumpe (50) und der zweiten Umwälzpumpe (60) ist.

8. Verfahren zum Umrüsten eines Unterseebootes zu einem Unterseeboot nach einem der vorstehenden Ansprüche mit einer Energiespeichervorrichtung (10) auf Basis von Blei-Akkumulatoren auf eine Energiespeichervorrichtung (10) auf Basis von Lithium-Akkumulatoren mit redundanten Kühlkreisläufen, **dadurch gekennzeichnet, dass** der Säureumwälzverdichter durch eine dritte Umwälzpumpe (70) ersetzt wird, wobei zusätzlich die dritte Umwälzpumpe (70) mit dem Energiespeicherkühlkreislauf (30) verbunden wird, wobei weiter zusätzlich die erste Kühlkreisverbindung (80), die zweite Kühlkreisverbindung (90), das erste Umschaltventil (100), das zweite Umschaltventil (110), das dritte Umschaltventil (120) und das vierte Umschaltventil (130) eingebaut werden.

## Claims

1. Submarine with a first waste heat generating device and a second waste heat generating device, wherein the first waste heat generating device is cooled via a second cooling circuit, wherein the second waste heat generating device is cooled via a first cooling circuit, wherein the first cooling circuit has a first circulation pump (50), wherein the second cooling circuit has a second circulation pump (60), wherein the second cooling circuit comprises a third circulation pump (70), wherein the third circulation pump (70) is arranged in parallel with the second circulation pump (60), wherein the submarine comprises a first cooling circuit connection (80), wherein the first cooling circuit connection connects the first cooling circuit upstream of the first circulation pump (50) to the second cooling circuit upstream of the second circulation pump (60) and downstream of the branch to the third circulation pump (70), **characterised in that** the submarine comprises a second cooling circuit connection (90), wherein the second cooling circuit connection (90) connects the first cooling circuit after the first circulation pump (50) to the second cooling circuit after the second circulation pump (60) and before the junction from the third circulation pump (70), wherein a first changeover valve (100) is arranged in the first cooling circuit connection (80) (100) is arranged in the first cooling circuit connection (80), wherein a second switchover valve (110) is arranged in the second cooling circuit connection (90), wherein a third switchover valve (120) is arranged in the second cooling circuit before the connection to the first cooling circuit connection (80) and after the branch to the third circulation pump (70) (120) is arranged in the second cooling circuit, a fourth switchover valve (130) is arranged in the third cooling circuit after the connection to the second cooling circuit connection (90) and before the junction from the third circulation pump (70).

2. Submarine according to claim 1, **characterised in that** the first waste heat generating device is an energy storage device (10) and the second waste heat generating device is a fuel cell device (20), wherein the second cooling circuit is an energy storage cooling circuit (30), wherein the first cooling circuit is a fuel cell cooling circuit (40).

3. Submarine according to claim 2, **characterised in that** a coolant degassing device (190) is arranged in parallel with the fuel cell device (20) in the fuel cell cooling circuit (40).

4. Submarine according to one of the preceding claims, **characterised in that** the first cooling circuit has a first heat exchanger (140), wherein the first heat exchanger (140) is cooled by ambient water via a first heat exchanger pump (160), wherein the second cooling circuit has a second heat exchanger (150), wherein the second heat exchanger (150) is cooled by ambient water via a second heat exchanger pump (170).

5. Submarine according to claim 4, **characterised in that** the inlet of the second heat exchanger (150) can be connected to the inlet of the first heat exchanger (140).

6. Submarine according to claim 4, **characterised in that** the submarine has a third heat exchanger pump, wherein the third heat exchanger pump can be connected alternately to the first heat exchanger (140) or the second heat exchanger (150).

7. Submarine according to one of the preceding claims, **characterised in that** the capacity of the third circulation pump (70) is lower than the capacity of the first circulation pump (50) and the second circulation pump (60).

8. Method for converting a submarine to a submarine according to one of the preceding claims with an energy storage device (10) based on lead accumulators to an energy storage device (10) based on lithium accumulators with redundant cooling circuits, **characterised in that** the acid circulation compressor is replaced by a third circulation pump (70), wherein the third circulation pump (70) is additionally connected to the energy storage cooling circuit (30), wherein the first cooling circuit connection (80), the second cooling circuit connection ( ) (90), the first changeover valve (100), the second switch valve (110), the third switch valve (120) and the fourth switch valve (130) are also installed.

## Revendications

1. Sous-marin équipé d'un premier dispositif générateur de chaleur résiduelle et d'un deuxième dispositif générateur de chaleur résiduelle, dans lequel le premier dispositif générateur de chaleur résiduelle est refroidi par un deuxième circuit de refroidissement, dans lequel le deuxième dispositif générateur de chaleur résiduelle est refroidi par un premier circuit de refroidissement, dans lequel le premier circuit de refroidissement comporte une première pompe de circulation (50), dans lequel le deuxième circuit de refroidissement comporte une deuxième pompe de circulation (60), dans lequel le deuxième circuit de refroidissement comprend une troisième pompe de circulation (70), dans lequel la troisième pompe de circulation (70) est disposée en parallèle avec la deuxième pompe de circulation (60), dans lequel le sous-marin comprend une première connexion de circuit de refroidissement (80), dans lequel la première connexion de circuit de refroidissement relie le premier circuit de refroidissement en amont de la première pompe de circulation (50) au deuxième circuit de refroidissement en amont de la deuxième pompe de circulation (60) et en aval de la dérivation vers la troisième pompe de circulation (70), **caractérisé en ce que** le sous-marin comprend un deuxième raccordement de circuit de refroidissement (90), dans lequel le deuxième raccordement de circuit de refroidissement (90) relie le premier circuit de refroidissement après la première pompe de circulation (50) au deuxième circuit de refroidissement après la deuxième pompe de circulation (60) et avant la jonction de la troisième pompe de circulation (70), dans lequel une première vanne d'inversion (100) est disposée dans le premier raccordement de circuit de refroidissement (80) (100) est disposée dans la première connexion du circuit de refroidissement (80), dans laquelle une deuxième vanne d'inversion (110) est disposée dans la deuxième connexion du circuit de refroidissement (90), dans laquelle une troisième vanne d'inversion (120) est disposée dans le deuxième circuit de refroidissement avant la connexion à la première connexion du circuit de refroidissement (80) et après la dérivation vers la troisième pompe de circulation (70) (120) est disposée dans le deuxième circuit de refroidissement, une quatrième vanne de commutation (130) est disposée dans le troisième circuit de refroidissement après le raccordement au deuxième raccordement du circuit de refroidissement (90) et avant la jonction de la troisième pompe de circulation (70).

2. Sous-marin selon la revendication 1, **caractérisé en ce que** le premier dispositif générateur de chaleur résiduelle est un dispositif de stockage d'énergie (10) et le deuxième dispositif générateur de chaleur résiduelle est un dispositif à pile à combustible (20), dans lequel le deuxième circuit de refroidissement est un circuit de refroidissement à stockage d'énergie (30), dans lequel le premier circuit de refroidissement est un circuit de refroidissement à pile à combustible (40).

3. Sous-marin selon la revendication 2, **caractérisé en ce qu'**un dispositif de dégazage du liquide de refroidissement (190) est disposé en parallèle avec le dispositif à pile à combustible (20) dans le circuit de refroidissement de pile à combustible (40).

4. Sous-marin selon l'une des revendications précédentes, **caractérisé en ce que** le premier circuit de refroidissement comporte un premier échangeur de chaleur (140), dans lequel le premier échangeur de chaleur (140) est refroidi par l'eau ambiante via une première pompe d'échangeur de chaleur (160), dans lequel le deuxième circuit de refroidissement comporte un deuxième échangeur de chaleur (150), dans lequel le deuxième échangeur de chaleur (150) est refroidi par l'eau ambiante via une deuxième pompe d'échangeur de chaleur (170).

5. Sous-marin selon la revendication 4, **caractérisé en ce que** l'entrée du deuxième échangeur de chaleur (150) peut être reliée à l'entrée du premier échangeur de chaleur (140).

6. Sous-marin selon la revendication 4, **caractérisé en ce que** le sous-marin comporte une troisième pompe d'échangeur de chaleur, dans lequel la troisième pompe d'échangeur de chaleur peut être connectée alternativement au premier échangeur de chaleur (140) ou au deuxième échangeur de chaleur (150).

7. Sous-marin selon l'une des revendications précédentes, **caractérisé en ce que** la capacité de la troisième pompe de circulation (70) est inférieure à la capacité de la première pompe de circulation (50) et de la deuxième pompe de circulation (60).

8. Procédé pour convertir un sous-marin en un sous-marin selon l'une des revendications précédentes avec un dispositif de stockage d'énergie (10) à base d'accumulateurs au plomb en un dispositif de stockage d'énergie (10) à base d'accumulateurs au lithium avec des circuits de refroidissement redondants, **caractérisé en ce que** le compresseur de circulation d'acide est remplacé par une troisième pompe de circulation (70), dans lequel la troisième pompe de circulation (70) est en outre connectée au circuit de refroidissement du dispositif de stockage d'énergie (30), dans lequel la première connexion du circuit de refroidissement (80), la deuxième connexion du circuit de refroidissement ( ) (90), la première vanne d'inversion (100), la deuxième vanne de commutation (110), la troisième vanne de commutation (120) et la quatrième vanne de commutation (130) sont également installées.
